Europäisches Patentamt

European Patent Office

Office européen des brevets

(19)

(11) **EP 0 977 485 B1**

(12) **EUROPÄISCHE PATENTSCHRIFT**

(45) Veröffentlichungstag und Bekanntmachung des Hinweises auf die Patenterteilung:
**26.06.2002 Patentblatt 2002/26**

(51) Int Cl.⁷: **A01N 59/12**

(21) Anmeldenummer: **98924139.3**

(86) Internationale Anmeldenummer:
**PCT/EP98/02280**

(22) Anmeldetag: **17.04.1998**

(87) Internationale Veröffentlichungsnummer:
**WO 98/47373 (29.10.1998 Gazette 1998/43)**

(54) **FLÜSSIGES IODOPHOR AUS POLY-N-VINYLLACTAM, DEXTRIN UND ALKOHOLEN**

LIQUID IODOPHOR FROM POLY-N-VINYL LACTAM, DEXTRINE AND ALCOHOLS

IODOPHORE LIQUIDE A BASE DE POLY-N-VINYLLACTAME, DE DEXTRINE ET D'ALCOOLS

(84) Benannte Vertragsstaaten:
**AT BE CH DE DK ES FI FR GB GR IE IT LI LU NL PT SE**

(30) Priorität: **24.04.1997 DE 19717191**

(43) Veröffentlichungstag der Anmeldung:
**09.02.2000 Patentblatt 2000/06**

(73) Patentinhaber: **BASF AKTIENGESELLSCHAFT 67056 Ludwigshafen (DE)**

(72) Erfinder:
• **ERNST, Andreas**
**D-67551 Worms (DE)**

• **BREITENBACH, Jörg**
**D-68199 Mannheim (DE)**
• **SANNER, Axel**
**D-67227 Frankenthal (DE)**

(56) Entgegenhaltungen:
**EP-A- 0 107 277**       **EP-A- 0 172 984**
**EP-A- 0 342 269**       **EP-A- 0 756 820**
**WO-A-95/28841**        **DE-A- 3 819 498**
**US-A- 4 151 275**       **US-A- 4 684 519**

• **DATABASE EPODOC European Patent Office XP002076308 & CN 1 073 577 A (HENGYANG COLLEGE OF MEDICINE) 30. Juni 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft verbessertes Verfahren zur Herstellung eines flüssigen Iodophors mit Dextrin und einem Poly-N-vinyllactam als Trägermaterial.

Auf dem Gebiet der Feindesinfektionsmittel ist PVP-Iod ein lange etabliertes, jedoch kostenintensives Produkt. Auch die Herstellung von Saccharid-haltigen Iodophoren durch Polymerisation von Vinylpyrrolidon in Anwesenheit der jeweiligen Oligo- oder Polysaccharide ist aus EP-A-526 800 bekannt. Derartige Produkte sind zwar preiswerter als PVP-Iod, aber entsprechen nicht den Anforderungen an PVP-Iod. Außerdem sind sie bisher pharmakologisch nicht akzeptiert.

WO 9528841 beschreibt die Herstellung von Iodophoren aus Poly-N-vinyllactam und Dextrin. Für Anwendungen des Iodophors in flüssiger Form ist es zweckmäßiger, einfacher und wirtschaftlicher das in WO 9528841 beschriebene Verfahren in wässriger Lösung auszuführen. Allerdings führt die Herstellung in rein wässriger Lösung zu hochviskosen Suspensionen mit einem hohen Feststoffanteil. Zudem ist die beobachtbare Bildung von Iodsublimat störend. Wird z. B. eine Mischung aus 10 Gew.-% Polyvinylpyrrolidon (K-Wert 30), 15 Gew.-% Dextrin mit einem DE-Wert von 17 bis 19, 6 Gew.-% Iod, 0.3 Gew.-% Ammoniumformiat und 68.7 Gew.-% Wasser unter Rühren innerhalb von vier Stunden auf eine Temperatur von 80°C erhitzt und nach weiteren acht Stunden bei 80°C auf Raumtemperatur abgekühlt, so erhält man eine hochviskose Suspension (Viskosität: 12300 mPas, Messung s. u.) mit 0.5 Gew.-% Iodsublimat und etwa 10 Gew.-% festen Rückstand. Der hohe Anteil an iodhaltigem Rückstand, das Iodsublimat und die pastenartige Konsistenz des so erhaltenen Produkts lassen ein verbessertes Verfahren wünschenswert erscheinen.

Der Erfindung lag daher die Aufgabe zugrunde, ein verbessertes Verfahren zur direkten Herstellung einer Iodophorlösung mit den Trägern Poly-N-vinyllactam und Dextrin zu entwickeln.

Demgemäss wurde ein Verfahren zur Herstellung von flüssigen Iodophoren mit Dextrinen und Poly-N-Vinyllactamen als Trägermaterial gefunden, welches dadurch gekennzeichnet ist, dass man die Trägermaterialien, Iod und Iodidionen oder statt der Iodidionen ein Reduktionsmittel in wässrigem Medium in Gegenwart eines ein- oder mehrwertigen Alkohols mit 1 bis 6 C-Atomen auf Temperaturen von 40 bis 100 °C erwärmt.

Als ein - oder mehrwertige Alkohole kommen erfindungsgemäss Methanol, bevorzugt Ethanol, n-Propanol, n-Butanol, n-Pentanol, n-Hexanol, Isopropanol, Isobutanol sowie weitere verzweigte Homologe der genannten Alkohole, Ethylenglykol, Glycerin oder deren Gemische in Betracht, wobei n-Propanol besonders bevorzugt ist.

Zur Herstellung des Iodophors werden die Komponenten vermischt und auf Temperaturen von 40 bis 100, bevorzugt 60 bis 95 °C erwärmt. In einer bevorzugten Verfahrensvariante wird das Iod in dem ein- oder mehrwertigen Alkoholkomponente gelöst und zugetropft. Die Reaktionszeit beträgt je nach den eingesetzten Mengen 1 bis 30 Stunden.

Die flüssigen Iodophore weisen insbesondere folgende Zusammensetzung auf:

a) 5 bis 60 Gew.-% Polyvinylpyrrolidon oder Poly-N-vinylcaprolactam,
b) 5 bis 60 Gew.-% Dextrin mit einem DE-Wert von 2 bis 40,
c) 1 bis 30 Gew.-% elementares Iod
d) 0.5 bis 15 Gew.-% Iodidionen,
e) 5 bis 40 Gew.-% der Alkoholkomponente, und
f) 20 bis 80 Gew.-% Wasser,

wobei die Summe der Komponenten a) bis f) gleich 100 Gew.-% ist. Bevorzugte Iodophore weisen eine Viskosität < 1000 mPa.s (25°C), bei einem Feststoffgehalt von 25-40 Gew.-% und einem verfügbaren Iodgehalt von 10-18 Gew.-% auf.

Die Dextrine sind handelsüblich und in einfacher Weise aus Stärke durch unvollständige Hydrolyse mit verdünnter Säure, durch Hitzeeinwirkung sowie durch oxidativen oder enzymatischen Abbau mit Hilfe von Amylasen zugänglich.

Durch Hydrolyse in wäßriger Phase erhältliche Stärkeabbauprodukte eines gewichtsmittleren Molekulargewichtes von 2500 bis 25000 werden im Unterschied zu den Röstdextrinen üblicherweise als verzuckerte Stärken bezeichnet und sind als solche im Handel erhältlich.

Derartige verzuckerte Stärken sind von den Röstdextrinen u.a. dadurch chemisch verschieden, daß bei einem hydrolytischen Abbau in wäßrigem Medium (üblicherweise Suspensionen oder Lösungen), der in der Regel bei Feststoffgehalten von 10 bis 30 Gew.-% sowie vorzugsweise säure- oder enzymkatalysiert vorgenommen wird, die Möglichkeit der Rekombination und Verzweigung im wesentlichen nicht gegeben ist, was sich nicht zuletzt auch in anderen Molekulargewichtsverteilungen äußert.

Die Herstellung verzuckerter Stärken ist allgemein bekannt und u.a. in Günther Tegge, Stärke und Stärkederivate, Behr's Verlag, Hamburg 1984, S. 173 und S. 220 ff sowie in der EP-A 441 197 beschrieben. Vorzugsweise handelt es sich bei den erfindungsgemäß zu verwendenden verzuckerten Stärken um solche, deren gewichtsmittleres Molekulargewicht $M_w$ im Bereich von 4000 bis 16000, besonders bevorzugt im Bereich von 6500 bis 13000 liegt.

Die erfindungsgemäß zu verwendenden verzuckerten Stärken sind normalerweise bei Raumtemperatur in Wasser vollständig löslich, wobei die Löslichkeitsgrenze in der Regel oberhalb von 50 Gew.-% liegt. Vorzugsweise sind die Lösungen bei Raumtemperatur bei 10 bis 20 Gew.-%, besonders bevorzugt bei 30 bis 40 Gew.-% klar löslich und nicht kolloidal suspendiert.

Darüber hinaus ist es empfehlenswert, solche erfindungsgemäß zu verwendenden verzuckerten Stärken anzuwenden, deren Dextrose-äquivalent DE 2 bis 40, vorzugsweise 10 bis 30 und besonders bevorzugt 10 bis 20 beträgt. Der DE-Wert charakterisiert das Reduktionsvermögen bezogen auf das Reduktionsvermögen von wasserfreier Dextrose und wird nach DIN 10 308, Ausgabe 5.71, des Deutschen Normenausschusses Lebensmittel und landwirtschaftliche Produkte, bestimmt (vgl. auch Günther Tegge, Stärke und Stärkederivate, Behr's Verlag, Hamburg 1984, S. 305).

Als Ausgangsstärken zur Herstellung der erfindungsgemäß zu verwendenden verzuckerten Stärken sind prinzipiell alle nativen Stärken wie Getreidestärken (z.B. Mais, Weizen, Reis oder Hirse), Knollen- und Wurzelstärken (z. B. Kartoffeln, Tapiokawurzeln oder Arrowroot) oder Sagostärken geeignet.

Ein wesentlicher Vorzug der erfindungsgemäß zu verwendenden verzuckerten Stärken ist, daß es hinsichtlich ihrer Anwendung, abgesehen von der in einfachster Weise durchzuführenden partiellen Hydrolyse der Ausgangsstärke, zu ihrer Herstellung keiner weiteren chemischen Modifizierung bedarf.

In den Beispielen wurden als verzuckerte Stärken die C* PUR Produkte 01906, 01908, 01910, 01915, 01921, 01924, 01932 oder 01934 der Cerestar Deutschland GmbH, Krefeld, eingesetzt. Sie weisen im wesentlichen alle eine bimodale Molekulargewichtsverteilung auf und sind wie folgt charakterisiert:

| Typ | $M_w$ | U | Gew.-% < 1000 | DE |
|---|---|---|---|---|
| 01906 | 20080 | 10,9 | 12,2 | 2- 5 |
| 01908 | 19290 | 10,0 | 15,9 | 8-10 |
| 01910 | 10540-12640 | 8,5-9,9 | 24,7-26,4 | 11-14 |
| 01915 | 6680-8350 | 6,8-8,4 | 32,9-34,7 | 17-19 |
| 01921 | 6700 | 7,4 | 39,1 | 20-23 |
| 01924 | 4730 | 6,8 | 53.6 | 26-30 |
| 01932 | 4500 | 7,9 | 63,2 | 33-35 |
| 01934 | 3000 | 6,0 | 68,4 | 36-39 |

Bestimmungen von $M_n$ mittels Dampfdruckosmose ergaben für die bevorzugten Typen 01910 und 01915 folgende Werte:

1560 g/mol (1910) 980 g/mol (1915) U = Uneinheitlichkeit

$M_w$ = Gewichts-Mittelwert des Molekulargewichts

$M_n$ = zahlenmäßiger Mittelwert des Molekulargewichts DE = Dextrose-Äquivalent

Für die Umsetzung des Iods und Iodids mit dem Träger in der Lösung muß das Iod in homogener Form vorliegen. Die Komplexbildung geschieht durch Zusatz von soviel Iod und Iodid, daß die Endmischung 1 bis 30, vorzugsweise 1 bis 10 Gew.-% Iod und pro Mol Iod ($J_2$) 1 Mol Iodid enthält. Das Kation des Iodids ist beliebig, in der Regel Natrium oder Kalium. Das Iodid kann durch eine äquivalente Menge eines Reduktionsmittels, das Iod zu Iodid reduziert, beispielsweise Ameisensäure und ihre Salze, vorzugsweise Ammoniumformiat, Glukose, Ascorbinsäure, Malonsäure, Oxalsäure, Ammoniumoxalat ersetzt werden, wenn die Ausgangsiodmenge entsprechend erhöht wird. Dabei ist zu berücksichtigen, daß Dextrine aufgrund ihrer aldehydischen Endgruppen auch ein gewisses Reduktionsvermögen für Iod haben. Überraschenderweise zeigte sich, daß durch einen Zusatz von niederen Alkoholen, vorzugsweise Ethanol oder Propanol als Lösemittel für das Iod und vorzugsweise Ethylenglykol oder Glycerin als Phasenvermittler für die Trägermaterialien eine homogene,niedrigviskose Lösung während und nach dem mehrstündigen Aufheizen erhalten werden konnte, die zudem keine Sublimation von Iod zeigte. Ohne Zusatz der Alkohole erhält man hochviskose Mischungen mit variierenden Mengen unlöslicher Feststoffanteile, die offensichtlich aus Iod und Polymermaterial bestehen und/oder Unverträglichkeiten zwischen den Trägermaterialien (Phasentrennungen) und zudem Iodsublimat.

Die verbesserte Lösung kann als solche in den Handel gebracht und angewendet werden. Die Anwendungen der Lösung als Feindesinfektionsmittel oder zur Geräte- und Flächendesinfektion kann zudem als verdünnte Lösung erfolgen. Das Produkt ist mit Wasser in jedem Verhältnis mischbar bzw. verdünnbar.

Die Poly-N-Vinyllactame haben K-Werte nach H. Fikentscher (Cellulosechemie <u>13</u> (1932), 58 bis 64 und 71 bis 74) im Bereich von 12 bis 100, vorzugsweise 25 bis 70. Als Poly-N-vinyllactame kommen insbesondere Poly-N-vinylpyrrolidon (PVP) oder Poly-N-vinylcaprolactam in Betracht. Besonders bevorzugt ist PVP.

Die Bestimmung des verfügbaren Iodgehaltes erfolgt nach dem Deutschen Arzneimittel Codex (DAC) 1986, 2. Ergänzung 1990, für Polyvidon-Iod. Dort ist der Gehalt zwischen mindestens 9 und höchstens 12 % verfügbarem Iod festgelegt. Gleiches gilt für die USP XXII (Povidone-Iodine). Auch die Bestimmung des Iodid-Gehaltes ist dort beschrieben. Der verfügbare Iodgehalt entspricht dem durch Titration mit Thiosulfat meßbaren Wert. Die Bestimmung des freien Iodgehalts erfolgt nach D. Horn und W. Ditter "PVP-Iod in der operativen Medizin", S. 7 ff., Springer-Verlag, Heidelberg 1984.

Der Verlust des verfügbaren Iods (Iodverlust) bei einer Wärmelagerung gibt Aufschluß über die Stabilität des Komplexes und wird wie folgt bestimmt:

Die Bestimmung erfolgt aus einer PVP-Iodlösung, die 1 % verfügbares Iod enthält.

Wärmelagerung

Die PVP-Iodlösung wird bis 1 cm unter dem Stopfen in eine braune 25 ml Schlifflasche gefüllt und anschließend 15 Stunden lang bei 80°C ± 0,5°C im Wärmeschrank gelagert. Etwa 15 Minuten nach Einbringen der Flasche in den Wärmeschrank wird durch Anheben des Stopfens kurz belüftet. Nach 15stundiger Lagerung werden nach Abkühlen des Flascheninhalts 5,0 ml entnommen und der Gehalt an verfügbarem Iod wie im DAC beschrieben mit 0,02 n Natriumthiosulfat-Lösung bestimmt (Verbrauch N).

Berechnung des Iodverlustes

$$\% \text{ Iodverlust} = \frac{V * N}{1} \cdot 100$$

dabei bedeuten:

V = Verbrauch an Na2S2O3*Lösung vor der Lagerung [ml])
N = Verbrauch an Na2S2O3*Lösung nach der Lagerung [ml])

Bemerkung:

Um Unregelmäßigkeiten (Temperaturschwankungen, Stromausfall etc.) während der Lagerung erkennen zu können, ist es zweckmäßig, eine Vergleichsprobe mit bekanntem Iodverlust mit zu analysieren.

Bestimmung der Viskosität

Die Viskosität der erhaltenen Produkte wurde mit einem Rotationsviskosimeter Rotavisco RV 20 mit dem Meßsystem M der Firma HAAKE Mess-Technik GmbH (Karlsruhe, Deutschland) gemessen.

Alle Messungen erfolgten bei 25°C. Die Angabe der dynamischen Viskosität erfolgt in mPas.

Die Dextrine sind allein nicht in der Lage, ausreichend stabile Iodkomplexe zu bilden. Sie können es aber in Mischung mit PVP oder Poly-N-vinylcaprolactam doch, denn gleiche Mengen der Mischung einerseits und von ungemischtem PVP oder Poly-N-vinylcaprolactam andererseits nehmen gleiche Mengen Iod auf, und zwar mit gleicher Bindungskraft. Es liegt also offenbar bei der Mischung eine Art Synergismus vor. Im Gegensatz zu Propfpolymeren handelt es sich bei den Mischungen um pharmakologisch akzeptierte Produkte. Gegenüber dem PVP-Iod bieten die Iodophore neben ökologischen Vorzügen, die auf der guten biologischen Abbaubarkeit des Dextrinanteils beruhen, wirtschaftliche Vorteile, da die Einsatzstoffkosten entscheidend reduziert sind.

Für Anwendungen von Iodophoren in wässrigen Systemen ist das erfindungsgemäße flüssige Iodophor zweckmäßig und aufgrund seiner leichten Dispergierbarbeit in Wasser besonders gut geeignet. Zudem ist keine Trocknung der herstellbedingten wässrigen Lösungen von Poly-N-vinyllactam und Dextrin erforderlich. Durch den Zusatz niederer Alkohole konnten überraschenderweise niedrigviskose Lösungen erhalten werden, die weder Iodsublimat noch unlösliche Rückstände aufwiesen. Die Erfindung erschließt somit in überraschend einfacher Weise einen wirtschaftlichen und einfachen Zugang zu flüssigen Iodophoren in Form wässriger Lösungen.

Beispiele

1. Eine Mischung aus 12 Gew.-% Polyvinylpyrrolidon (K-Wert 30), 12 Gew.-% Dextrin mit einem DE-Wert von 17 bis 19, 6 Gew.-% Iod, 0.3 Gew.-% Ammoniumformiat, 16.7 Gew.-% Ethanol und 53 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 13.9 %, der Iodverlust 5.7 %, der freie Iodgehalt 4.1 ppm, der Iodidgehalt 6.4 % und die Viskosität 120 mPas.

2. Eine Mischung aus 12 Gew.-% Polyvinylpyrrolidon (K-Wert 30), 12 Gew.-% Dextrin mit einem DE-Wert von 17 bis 19, 6 Gew.-% Iod, 0.3 Gew.-% Ammoniumformiat, 16.7 Gew.-% n-Propanol und 53 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 13.6 %, der Iodverlust 8.3 %, der freie Iodgehalt 5.2 ppm, der Iodidgehalt 6.0 % und die Viskosität 148 mPas.

3. Eine Mischung aus 21 Gew.-% Polyvinylpyrrolidon (K-Wert 30), 3 Gew.-% Dextrin mit einem DE-Wert von 17 bis 19, 6 Gew.-% Iod, 0.3 Gew.-% Ammoniumformiat, 15 Gew.-% i-Propanol und 54.7 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 11.0 %, der Iodverlust 10.1 %, der freie Iodgehalt 2.2 ppm, der Iodidgehalt 5.8 % und die Viskosität 80 mPas.

4. Eine Mischung aus 9 Gew.-% Polyvinylpyrrolidon (K-Wert 30), 12 Gew.-% Dextrin mit einem DE-Wert von 17 bis 19, 6 Gew.-% Iod, 0.3 Gew.-% Ammoniumformiat, 20 Gew.-% Glycerin, 10 Gew.-% Ethanol und 42.7 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 27 Gew.-%. Der verfügbare Iodgehalt bezogen auf den Feststoff betrug 13.2 %, der Iodverlust 5.5 %, der freie Iodgehalt 8.2 ppm, der Iodidgehalt 6.2 % und die Viskosität 420 mPas.

5. Eine Mischung aus 24 Gew.-% Polyvinylpyrrolidon (K-Wert 30), 0 Gew.-% Dextrin mit einem DE-Wert von 17 bis 19, 6 Gew.-% Iod, 0.3 Gew.-% Ammoniumformiat, 6 Gew.-% Ethylenglykol, 10 Gew.-% Ethanol und 53.7 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 12.7 %, der Iodverlust 7.9 %, der freie Iodgehalt 6.3 ppm, der Iodidgehalt 6.4 % und die Viskosität 280 mPas.

6. Eine Mischung aus 12 Gew.-% Polyvinylpyrrolidon (K-Wert 30), 12 Gew.-% Dextrin mit einem DE-Wert von 17 bis 19, 6 Gew.-% Iod, 0.3 Gew.-% Ammoniumformiat, 14 Gew.-% n-Propanol und 55.7 Gew.-% Wasser wurde unter Rühren innerhalb von vier Stunden auf eine Temperatur von 70°C erhitzt. Nach weiteren acht Stunden bei 70°C kühlte man die Lösung auf Raumtemperatur ab. Der theoretische Feststoffgehalt beträgt 30 Gew.-%. Der verfügbare Iodgehalt bezogen auf den Feststoff betrug 14.4 %, der Iodverlust 10.5 %, der freie Iodgehalt 5.3 ppm, der Iodidgehalt 7.0 % und die Viskosität 110 mPas.

7. Eine Mischung aus 10.8 Gew.-% Polyvinylpyrrolidon (K-Wert 30), 13.2 Gew.-% Dextrin mit einem DE-Wert von 17 bis 19, 6 Gew.-% Iod, 0.3 Gew.-% Ammoniumformiat, 20 Gew.-% Ethanol und 49.7 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 13.1 %, der Iodverlust 12.5 %, der freie Iodgehalt 4.6 ppm, der Iodidgehalt 6.6 % und die Viskosität 145 mPas.

8. Eine Mischung aus 20 Gew.-% Polyvinylpyrrolidon (K-Wert 30), 4 Gew.-% Dextrin mit einem DE-Wert von 17 bis 19, 6 Gew.-% Iod, 0.3 Gew.-% Ammoniumformiat, 10.7 Gew.-% i-Propanol und 59 Gew.-% Wasser wurde unter Rühren innerhalb von vier Stunden auf eine Temperatur von 80°C erhitzt. Nach weiteren acht Stunden bei 80°C kühlte man die Lösung auf Raumtemperatur ab. Der theoretische Feststoffgehalt beträgt 30 Gew.-%. Der verfügbare Iodgehalt bezogen auf den Feststoff betrug 11.0 %, der Iodverlust 17.1 %, der freie Iodgehalt 2.1 ppm, der Iodidgehalt 6.1 % und die Viskosität 130 mPas.

9. Eine Mischung aus 25,5 Gew.-% Iod, 0,6 Gew.-% Ammoniumformiat und 73,9 Gew.-% Ethanol wurde unter Rühren innerhalb von 30 min zu einer auf 80°C erwärmten Lösung von 30 Gew.-% Polyvinylpyrrolidon (K 30) und 70 Gew.-% Wasser gegeben. Nach weiteren 11 Stunden bei 80°C kühlte man die Lösung auf Raumtemperatur ab. Der Feststoffgehalt betrug 29 Gew.-%, der Iodverlust 9,0 Gew.-%, der verfügbare Iodgehalt 11,6 Gew.-% und die Viskosität 130 mPa.s bei 25°C.

**Patentansprüche**

1. Verfahren zur Herstellung von flüssigen Iodophoren mit Poly-N-Vinyllactamen und Dextrinen als Trägermaterialien, **dadurch gekennzeichnet, dass** man eine Mischung aus den Trägermaterialien, Iod und Iodidionen oder, statt der Iodidionen, ein Reduktionsmittel in wässrigem Medium in Gegenwart eines ein- oder mehrwertigen Alkohols mit 1 bis 6 C-Atomen auf Temperaturen von 40 bis 100°C erwärmt.

2. Verfahren nach Anspruch 1, **dadurch gekennzeichnet, dass** man als Alkoholkomponente n-Propanol einsetzt.

3. Verfahren nach Anspruch 1 oder 2, **dadurch gekennzeichnet, dass** man das Iod in der Alkoholkomponente löst und zu der wässrigen Lösung der anderen Komponenten zutropft.

**Claims**

1. A process for preparing liquid iodophores with poly-N-vinyllactams and dextrins as carrier materials, which comprises heating a mixture of the carrier materials, iodine and iodide ions or, in place of the iodide ions, a reducing agent in aqueous medium in the presence of a monohydric or polyhydric alcohol having 1 to 6 carbon atoms at from 40 to 100°C.

2. A process as claimed in claim 1, wherein n-propanol is employed as alcohol component.

3. A process as claimed in claim 1 or 2, wherein the iodine is dissolved in the alcohol component and added dropwise to the aqueous solution of the other components.

**Revendications**

1. Procédé pour la préparation d'iodophores liquides avec des poly-N-vinyllactames et des dextrines en tant que matières véhicules, **caractérisé par le fait que** l'on chauffe un mélange de la matière véhicule, d'iode et d'ions iodure ou bien, à la place des ions iodure, d'un agent réducteur, en milieu aqueux, en présence d'un alcool mono- ou poly-valent en $C_1$-$C_6$, à des températures de 40 à 100°C.

2. Procédé selon la revendication 1, **caractérisé par le fait que** le composant alcool utilisé est le n-propanol.

3. Procédé selon la revendication 1 ou 2, **caractérisé par le fait que** l'on dissout l'iode dans le composant alcool et on ajoute cette solution goutte à goutte à la solution aqueuse des autres composants.